# EUROPEAN PATENT SPECIFICATION

(11) **EP 2 833 451 B1**
(45) Date of publication and mention of the grant of the patent: **11.01.2017**
(21) Application number: 13767578.1
(22) Date of filing: 19.03.2013
(51) Int. Cl.: H01M 4/90, H01M 8/1018

(54) **METHOD FOR PRODUCING ELECTRODE CATALYST FOR FUEL CELLS, ELECTRODE CATALYST FOR FUEL CELLS, AND USE OF SAME**
VERFAHREN ZUR HERSTELLUNG EINES ELEKTRODENKATALYSATORS FÜR BRENNSTOFFZELLEN, ELEKTRODENKATALYSATOR FÜR BRENNSTOFFZELLEN UND VERWENDUNG DAVON
PROCÉDÉ PERMETTANT DE PRODUIRE UN CATALYSEUR D'ÉLECTRODE POUR DES PILES À COMBUSTIBLE, CATALYSEUR D'ÉLECTRODE POUR PILES À COMBUSTIBLE ET UTILISATION DE CE DERNIER

(30) Priority: 26.03.2012 JP 2012069518
(43) Date of publication of application: 04.02.2015
(73) Proprietor: Showa Denko K.K., Tokyo 105-8518 (JP)
(72) Inventor: MONDEN, Ryuji, Tokyo 105-8518 (JP); IMAI, Takuya, Tokyo 105-8518 (JP); ITO, Yuji, Tokyo 105-8518 (JP); LEE, Kunchan, Tokyo 105-8518 (JP); SATO, Takashi, Tokyo 105-8518 (JP)
(74) Representative: Strehl Schübel-Hopf & Partner
(86) International application number: PCT/JP2013/057777
(87) International publication number: WO 2013/146453

(56) References cited:
- WO-A1-02/17428
- WO-A1-02/17428
- WO-A1-2006/104123
- WO-A1-2010/131634
- JP-A- 2007 242 447
- JP-A- 2010 088 981
- JP-A- 2010 088 981

## Description

### Technical Field

The present invention concerns a production process of an electrode catalyst for fuel cells, an electrode catalyst for fuel cells and uses thereof.

### Background Art

A polymer electrolyte fuel cell (PEFC) is a fuel cell in the form in which a polymer solid electrolyte is sandwiched between an anode and a cathode, a fuel is supplied to the anode, and oxygen or air is supplied to the cathode, whereby oxygen is reduced at the cathode to produce electricity. As the fuel, hydrogen, methanol, or the like is mainly used.

To enhance a reaction rate in a fuel cell and to enhance the energy conversion efficiency of the fuel cell, a layer containing a catalyst (hereinafter also referred to as the "electrode catalyst layer for fuel cells") has been conventionally disposed on the surface of a cathode (air electrode) or the surface of an anode (fuel electrode) of the fuel cell.

As such a catalyst, noble metals have been generally used, and among the noble metals, a noble metal stable at a high potential and having a high activity, such as platinum or palladium, has been mainly used. However, these noble metals are expensive and limited in their resource amount, and thus the development is underway of alternative various catalysts (for example, electrode catalysts for fuel cells containing a metal atom, a carbon atom, a nitrogen atom and an oxygen atom, as disclosed in e.g., Patent Literatures 1 and 2).

A cathode of a fuel cell involves the generation of water from reaction shown by Formula: O₂ + 4H⁺ + 4e⁻ → 2H₂O, and it can happen that this water stays on surfaces or in pores of a cathode catalyst layer, so-called flooding phenomenon, thereby blocking passages for the diffusion of gas necessary for reaction, resulting in considerable decrease in the power of fuel cells.

A general approach taken in order to prevent the flooding phenomenon is dispersing in the catalyst layer water-repellent particles, for example, polytetrafluoroethylene (PTFE) particles thereby providing the catalyst layer with water-repellency to improve the dissipation of generated water.

Patent Literature 3 (JP-A-2005-276746), disclosing a polymer electrolyte fuel cell, describes its object of providing a fuel cell with increased output by preventing the resistance of an electrode from increasing which is caused by the absence of conductivity of water repellent particles for imparting water-repellency to a catalyst layer, and particularly by reducing IR drops in high-current operation. This polymer electrolyte fuel cell has a cathode catalyst which is composed of a carbon supporting a metal catalyst, a proton conductive polymer, an electrolyte and a material having water-repellency (e.g., fluorinated graphite).

Patent Literature 4 (WO2006/104123) describes carrying out treatment of bringing fluorine gas or a mixture gas of fluorine gas and an inert gas into contact with a platinum black material thereby preventing a platinum catalyst of an anode from being adsorbed to and poisoned by carbon monoxide in a fuel gas so that the catalyst is prevented from deactivation. It is described that this treatment allows fluorine to be adsorbed onto a platinum black surface (paragraph [0031]).

### Citation List

### [Patent Literature]

[Patent Literature 1] WO2010/131634
[Patent Literature 2] WO2011/99493
[Patent Literature 3] JP-A-2005-276746
[Patent Literature 4] WO2006/104123

### Summary of the Invention

### Technical Problem

Nonetheless, in the technique in Patent Literature 3 of adding a water-repellent material to a catalyst layer and the technique in Patent Literature 4 of allowing fluorine to be adsorbed on a platinum black surface, part of the surface of the catalyst are not made water-repellent, so that it can happen that water is not removed from the catalyst surface and flooding phenomenon takes place.

An object of the present invention, in view of the problems associated with the conventional techniques described above, is to suppress flooding phenomenon in an electrode catalyst for fuel cells containing a specific metal atom, a carbon atom, a nitrogen atom and an oxygen atom. Technical Solution

The present invention concerns, for example, [1] to [14 ] described below.

[1] A production process of an electrode catalyst for fuel cells comprising a fluorination step of bringing a catalyst body into contact with fluorine, the catalyst body comprising titanium and an atom of at least one metal element M selected from the group consisting of iron and lanthanum, a carbon atom, a nitrogen atom and an oxygen atom, wherein titanium:M = (1-α):α, provided that 0≤α≤0.20, and wherein when a composition of the catalyst body is expressed as MCₓN_{y}O_{z} (provided that M is the metal element M and the total amount of M is 1), the ranges of x, y and z are 0<x≤7, 0<y≤2 and 0<z≤3.
[2] The process for producing an electrode catalyst for fuel cells according to [1], wherein in the fluorination step, the catalyst body is brought into contact with a mixture gas of fluorine gas and a diluting gas.
[3] The process for producing an electrode catalyst for fuel cells according to [2], wherein the fluorine gas concentration in the mixture gas is from 0.1 to 50 vol%.
[4] The process for producing an electrode catalyst for fuel cells according to any one of [1] to [3], wherein the fluorination step is performed at 0 to 500°C.
[5] The process for producing an electrode catalyst for fuel cells according to any one of [1] to [4], wherein the fluorination step is performed for 1 to 120 minutes.
[6] An electrode catalyst for fuel cells comprising titanium and an atom of at least one metal element M selected from the group consisting of iron and lanthanum, a carbon atom, a nitrogen atom and an oxygen atom, the electrode catalyst for fuel cells having a fluorinated surface, wherein titanium:M =(1-α):α, provided that 0≤α≤0.20, and wherein when a composition of the catalyst body is expressed as MCₓN_{y}O_{z} (provided that M is the metal element M and the total amount of M is 1), the ranges of x, y and z are 0<x≤7, 0<y≤2 and 0<z≤3.
[7] An electrode catalyst for fuel cells which is obtained by the process according to any one of [1] to [5].
[8] The electrode catalyst for fuel cells according to [6] or [7], which comprises 0.005 to 0.2 mol of a fluorine atom based on 1 mol of an atom of the metal element.
[9] An electrode catalyst layer for fuel cells comprising the electrode catalyst for fuel cells according to any one of [6] to [8].
[10] The electrode catalyst layer for fuel cells according to [9], further comprising electron conductive particles.
[11] An electrode comprising an electrode catalyst layer for fuel cells and a porous support layer, wherein the electrode catalyst layer for fuel cells is the electrode catalyst layer for fuel cells according to [9] or [10].
[12] A membrane electrode assembly comprising a cathode, an anode and an electrolyte membrane interposed between the cathode and the anode, wherein the cathode and/or the anode is the electrode according to [11].
[13] A fuel cell comprising the membrane electrode assembly according to [12].
[14] The fuel cell according to [13], which is a polymer electrolyte fuel cell.

### The Advantageous Effect of the Invention

According to the present invention, an electrode catalyst for fuel cells in which flooding phenomenon is suppressed and its production process are provided.

### Brief Description of the Drawings

Fig.1 shows current-voltage properties of a single cell (c1) of Comparative Example 1 and a single cell (7) of Example 7.
Fig.2 shows current-voltage properties of a single cell (c2) of Comparative Example 2 and a single cell (9) of Example 9.

### Description of Embodiments

### [Electrode Catalyst for Fuel Cells and Its Production Process]

A production process of the electrode catalyst for fuel cells according to the present invention comprises a fluorination step of bringing an electrode catalyst for fuel cells (hereinafter referred to also as the "catalyst body") into contact with fluorine, the catalyst body comprising an atom of a specific metal element M, a carbon atom, a nitrogen atom and an oxygen atom.

### <Catalyst Body>

As the catalyst body, a known electrode catalyst for fuel cells comprising an atom of a metal element M, a carbon atom, a nitrogen atom and an oxygen atom may be used.

The composition of said electrode catalyst for fuel cells is expressed as MCₓN_{y}O_{z} (provided that M is a metal element M and the total amount of M is 1), wherein the ranges of x, y and z are about 0<x≤7, 0<y≤2 and 0<z≤3.

The metal element M is at least one selected from the group consisting of iron and lanthanum.

In terms of obtaining catalysts with high oxygen reducing ability, the present invention uses titanium and a metal element M' selected from iron and lanthanum wherein titanium: M'= (1-α): α (provided that 0≤α≤0.20).

The electrode catalyst for fuel cells as described above is produced generally via a step of subjecting a raw material comprising the metal element M (for example, raw material comprising a metal element M, carbon and nitrogen) to heat-treatment at around 400 to 1500°C, the heat treatment involving feeding any insufficient elements.

The catalyst body, which is not particularly limited, is for example, an electrode catalyst for fuel cells described in Patent Literature 1 (hereinafter referred to also as the "catalyst P1") or an electrode catalyst for fuel cells described in Patent Literature 2 (hereinafter referred to also as the "catalyst P2"), described below.

### [Catalyst P1]

The catalyst P1 is an electrode catalyst for fuel cells containing at least a titanium element as the metal element M. The catalyst P1 contains atoms of metal elements, a carbon atom, a nitrogen atom and an oxygen atom, wherein the metal elements are titanium and metal element M1, i.e. lanthanum.

### (Production Process of Catalyst P1)

A production process of the catalyst P1, which is not particularly limited, is for example, a process comprising a step of obtaining the catalyst P1 from a metal carbonitride containing the metal element M1 and titanium (production process of the catalyst P1).

### (Production Step of Metal Carbonitride)

Examples of a process for obtaining the metal carbonitride used in the production process of the catalyst P1 include a method of heat-treating a mixture that comprises a metal element M1-containing compound and a titanium-containing compound to produce the metal carbonitride (heat-treated product) (Step 1).

### (Step 1)

In the production of metal carbonitrides, heat-treatment temperature generally ranges from 500 to 2200°C. At the time of heat-treatment, nitrogen or a mixture gas containing a nitrogen compound is fed whereby nitrogen in a carbonitride synthesized can be supplied.

Examples of the "metal element M1-containing compound" as a raw material are oxide, carbide, nitride, carbonate, nitrate, carboxylate such as acetate, oxalate and citrate, and phosphate, of the metal element M1.

The metal element M1-containing compounds may be used singly, or two or more kinds thereof may be used in combination.

Examples of the "titanium-containing compound" are oxide, carbide, nitride, carbonate, nitrate, acetate, oxalate, citrate, carboxylate, phosphate and oxychloride, of titanium.

The titanium-containing compounds may be used singly, or two or more kinds thereof may be used in combination. Multiple phases may be contained in single particles of the titanium-containing compound.

The mixture used as a raw material in Step 1 may contain carbon.

The mixture gas may be nitrogen gas or a nitrogen compound gas alone, or may be a mixture of nitrogen gas and a nitrogen compound gas. Further, together with nitrogen gas and/or the nitrogen compound gas, an inert gas may be used.

### (Production Step of Catalyst P1)

Next, the production process of the catalyst P1, specifically, the step of heat-treating the metal carbonitride obtained in Step (1) in an oxygen-containing mixture gas to obtain the catalyst P1 is described.

The oxygen-containing mixture gas contains, in addition to oxygen gas, an inert gas. Examples of the inert gas include nitrogen gas, helium gas, neon gas, argon gas, krypton gas, xenon gas and radon gas.

The oxygen-containing mixture gas may further contain hydrogen gas.

In this step, the oxygen concentration in the oxygen-containing mixture gas, which depends on heat-treatment time and heat-treatment temperature, is preferably 0.005 to 10 vol%.

When the oxygen-containing mixture gas contains hydrogen gas, the hydrogen concentration, which depends on heat-treatment time and heat-treatment temperature, is preferably 0.01 to 10 vol%.

The heat-treatment temperature in this step generally ranges from 400 to 1500°C. The heat-treatment time generally ranges from about 0.2 second to about 10 hours.

The heat-treated product obtained by the above-mentioned production process and the like may be used as the catalyst P1 as it is, or may be further disintegrated before used as the catalyst P1.

### [Catalyst P2]

The catalyst P2 is an electrode catalyst for fuel cells produced by a process for producing an electrode catalyst for fuel cells comprising:
Step 1 of mixing at least a transition metal-containing compound, a nitrogen-containing organic compound and a solvent with one another to obtain a catalyst precursor solution,
Step 2 of removing the solvent from the catalyst precursor solution, and
Step 3 of heat-treating a solid content residue obtained in Step 2 at a temperature of 500 to 1100°C to obtain an electrode catalyst,
wherein part or whole of the transition metal-containing compound is a compound containing at least one transition metal element M2 selected from elements of Group 4 and Group 5 of the periodic table as the metal element M.

### (Step 1)

In Step 1, at least the transition metal-containing compound, the nitrogen-containing organic compound and a solvent are mixed with one another to obtain a catalyst precursor solution.

Examples of the above-mentioned mixing procedure include:
Procedure (i): to a container, a solvent is prepared, and thereto the transition metal-containing compound and the nitrogen-containing organic compound are added and dissolved to be mixed with each other, and
Procedure (ii): a solution of the transition metal-containing compound and a solution of the nitrogen-containing organic compound are prepared and mixed with each other.

When the transition metal-containing compound used is a first transition metal-containing compound together with a second transition metal-containing compound which are described later, a preferred procedure in the procedure (ii) is as follows. Procedure (ii'): a solution of the first transition metal-containing compound, and a solution of the second transition metal-containing compound and the nitrogen-containing organic compound are prepared and mixed with each other.

### <Transition metal-containing compound>

Part or whole of the transition metal-containing compound is a compound containing, as the metal element M, at least one transition metal element M2 selected from elements of Group 4 and Group 5 of the periodic table. Specific examples of the transition metal element M2 include titanium, zirconium, hafnium, vanadium and niobium. In the present invention, titanium is an essential element. These may be used singly, or two or more kinds thereof may be used in combination.

The transition metal-containing compound preferably contains at least one kind selected from an oxygen atom and a halogen atom. Specific examples thereof include metal phosphoric acid salts, metal sulfuric acid salts, metal nitric acid salts, metal organic acid salts, metal acid halides (intermediate hydrolysates of metal halides), metal alkoxides, metal halides, metal halates and metal hypohalites and metal complexes. These may be used singly, or two or more kinds thereof may be used in combination.

The transition metal-containing compound used is a transition metal-containing compound containing as a transition metal element the transition metal element M1 of Group 4 or Group 5 of the periodic table (hereinafter referred to as the "first transition metal-containing compound"), in combination with a transition metal-containing compound containing iron as a transition metal element M2 (hereinafter referred to as the "second transition metal-containing compound"). The use of the second transition metal-containing compound improves performance of the resultant catalyst.

As the transition metal element M2 in the second transition metal-containing compound, iron is used in terms of the balance between cost and performance of the resultant catalyst.

### <Nitrogen-containing organic compound>

The nitrogen-containing organic compound is preferably a compound capable of forming a ligand that can coordinate to a metal atom in the transition metal-containing compound (preferably, a compound capable of forming a mononuclear complex), and is further preferably a compound capable of forming a multidentate ligand (preferably bidentate ligand or terdentate ligand) (capable of forming a chelate).

The nitrogen-containing organic compounds may be used singly, or two or more kinds thereof may be used in combination.

### <Solvent>

Examples of the solvent include water, alcohols and acids. These may be used singly, or two or more kinds thereof may be used in combination.

### <Precipitation Suppressant>

When the transition metal-containing compound contains a halogen atom, adding 1 wt% or more of a strong acid is preferred. For example, when the acid is hydrochloric acid, acid is added such that the concentration of hydrogen chloride in the solution is 5 wt% or more, more preferably 10 wt% or more.

### (Step 2)

In Step 2, from the catalyst precursor solution obtained in Step 1, the solvent is removed.

The solvent removal may be carried out in air, or may be carried out under an inert gas (e.g., nitrogen, argon, helium) atmosphere.

### (Step 3)

In Step 3, the solid content residue obtained in Step 2 is heat-treated to obtain an electrode catalyst.

The temperature in this heat-treatment is 500 to 1100°C. The heat-treatment time is generally about 0.2 second to about 10 hours.

It is preferred that the atmosphere in carrying out the heat-treatment contains an inert gas as its main component.

### <Fluorination Step>

In the fluorination step of the production process of the electrode catalyst for fuel cells according to the present invention, the catalyst body is brought into contact with fluorine gas (F₂ molecule). By the fluorination step, the surface of the catalyst body is fluorinated.

The fluorine is fed preferably as a mixture gas containing fluorine gas and a diluting gas.

Examples of the diluting gas include nitrogen gas, helium gas, argon gas, neon gas, krypton gas, xenon gas and radon gas. From the viewpoint of e.g., easy availability, nitrogen gas and argon gas are preferred. These may be used singly, or two or more kinds thereof may be used in combination.

The proportion of the fluorine gas in the mixture gas is preferably 0.01 to 50 vol%, more preferably 1 to 20 vol%, and further preferably 0.5 to 2 vol%. When the proportion of fluorine gas is in the above range, it is possible to obtain an electrode catalyst for fuel cells in which flooding is suppressed with the oxygen reducing ability of the catalyst body not significantly impaired.

The fluorination step is performed preferably for 1 to 120 minutes, more preferably for 1 to 60 minutes. The fluorination step is performed preferably at 20 to 300°C, more preferably at 50 to 250°C. When the time and the temperature are in the above range, it is possible to obtain an electrode catalyst for fuel cells in which flooding is suppressed with the oxygen reducing ability of the catalyst body not significantly impaired.

In terms of obtaining an electrode catalyst for fuel cells having much superior oxygen reducing ability (higher oxygen reduction onset potential) than afforded by the above-mentioned catalyst body, it is preferred that water content of the surface of the catalyst body is completely removed before the fluorination step is carried out.

### [Electrode Catalyst for Fuel Cells]

The electrode catalyst for fuel cells according to the present invention comprises an atom of a specific metal element M, a carbon atom, a nitrogen atom and an oxygen atom, wherein at least part of a surface of the catalyst is fluorinated.

The electrode catalyst for fuel cells according to the present invention can be produced by the above-mentioned production process of the electrode catalyst for fuel cells according to the present invention.

The degree of fluorination expressed in terms of an atomic number ratio (molar ratio) of a whole metal element M atom to a fluorine atom in the electrode catalyst for fuel cells is as follows. The metal element M atom: the fluorine atom is preferably 1:0.005 to 0.2, more preferably 1:0.01 to 0.15, further preferably 0.01 to 0.1.

The electrode catalyst for fuel cells having a metal element M atom and a fluorine atom in the above range can prevent flooding without impairing the oxygen reducing ability of the catalyst body.

The degree of fluorination can be increased by, for example, in the above-described fluorination step, increasing the proportion of fluorine gas, elevating temperature, lengthening time and the like.

The electrode catalyst for fuel cells is preferably in the form of powder in order to have increased catalytic ability.

The contact angle of the electrode catalyst for fuel cells of the present invention, in order to suppress flooding, is preferably 25° or more, more preferably 30° or more and further preferably 35° or more. The upper limit may be, for example, 90°. The value of the contact angle is obtained through measurement using a tablet produced by using a tablet-forming device from 0.2 g of the catalyst which is allowed to stand for 30 minutes with pressurization to 37 MPa, wherein the measurement employs a DropMaster contact angle measuring instrument (manufactured by Kyowa Interface Science Co., LTD.) and is based on perfect circle fitting method.

The electrode catalyst for fuel cells of the present invention has a specific surface area as calculated by BET method preferably of 5 m²/g or more, more preferably 10 m²/g or more and further preferably 50 m²/g or more. The upper limit may be, for example, 1000 m²/g.

The oxygen reduction onset potential (potential measured by the method adopted in Example described later) of the electrode catalyst for fuel cells of the present invention is preferably 0.80 V or more (vs.NHE), more preferably 0.84 V or more (vs.NHE) and further preferably 0.90 V or more (vs.NHE), as measured versus a reversible hydrogen electrode. The upper limit may be, for example, 1.2 V (vs.NHE).

### [Uses]

The electrode catalyst layer for fuel cells according to the present invention comprises the electrode catalyst for fuel cells.

Preferably, the electrode catalyst layer for fuel cells further comprises an electron conductive powder. The inclusion of the electron conductive powder can further increase reduction current. The electron conductive powder is believed to provide the catalyst with electric points for inducing electrochemical reaction resulting in the increase of reduction current. The electron conductive powder is not particularly limited as long as being generally used in electrode catalyst layers for fuel cells.

The electron conductive particles are generally used as a carrier of the catalyst.

Preferably, the electrode catalyst layer for fuel cells further comprises a polymer electrolyte. The polymer electrolyte is not particularly limited as long as being generally used in electrode catalyst layers for fuel cells.

The electrode catalyst layer for fuel cells may be used as an anode catalyst layer or a cathode catalyst layer. The electrode catalyst layer for fuel cells hardly undergoes flooding phenomenon, and comprises the catalyst having high oxygen reducing ability and being resistant to corrosion in acidic electrolytes even at high potential, and is therefore useful as a catalyst layer provided in a cathode of a fuel cell (as a cathode catalyst layer). In particular, the catalyst layer is preferably provided in a cathode of a membrane electrode assembly in a polymer electrolyte fuel cell.

The electrode according to the present invention comprises the electrode catalyst layer for fuel cells and a porous support layer.

The electrode may be used either as a cathode or as an anode. The electrode is excellent in durability and has a large catalytic ability, and thus exhibits effects more when used as a cathode.

The membrane electrode assembly according to the present invention is a membrane electrode assembly composed of a cathode, an anode and an electrolyte membrane interposed between the cathode and the anode, wherein the cathode and/or the anode is the electrode according to the present invention.

As the electrolyte membranes, perfluorosulfonic acid-based electrolyte membranes or hydrocarbon electrolyte membranes are generally used, and there may also be used membranes in which polymer microporous membranes are impregnated with liquid electrolyte; membranes in which porous bodies are filled with polymer electrolytes; or the like.

The fuel cell according to the present invention comprises the membrane electrode assembly.

The electrode reaction in fuel cells takes place at a so-called three-phase interface (electrolyte-electrode catalyst-reactant gas). The fuel cells are classified according to the electrolytes used, into several types such as molten carbonate type (MCFC), phosphoric acid type (PAFC), solid oxide type (SOFC), polymer electrolyte type (PEFC), and the like. The fuel cell of the present invention is preferably a polymer electrolyte fuel cell.

### Examples

Hereinafter, the present invention will be specifically described by Examples.

Various measurements were conducted by the following manners.

### 1. Elemental Analysts;

### <Metal>

About 0.1 g of a sample was weighed in a quartz beaker to completely decompose the sample by heating, using sulfuric acid, nitric acid, and fluorinated acid. After cooling, this solution was quantitatively determined to 100 ml, was further appropriately diluted, and was quantitated using ICP-OES (VISTA-PRO manufactured by SII) or ICP-MS (HP7500 manufactured by Agilent).

### <Carbon>

About 0.01g of a sample was weighed and subjected to measurement using a carbon/sulfur analyzer (EMIA-920V manufactured by HORIBA, Ltd.).

### <Nitrogen and Oxygen>

About 0.01 g of a sample was weighed, and sealed into a Ni capsule, and subjected to measurement using an oxygen/nitrogen analyzer (TC600, manufactured by LECO).

### <Fluorine>

Several mg of a sample was decomposed by combustion while flowing water vapor under oxygen stream. A generated gas was made to be absorbed by 10 mM Na₂CO₃ (containing hydrogen peroxide; standard for correction Br-: 5 ppm) to measure the amount of fluorine by ion chromatography.

Combustion decomposition conditions:
Sample combustion apparatus: AQF-100 (manufactured by Mitsubishi Chemical Analytech Co., Ltd.)
Combustion tube temperature: 950°C (temperature-increase decomposition by moving sample board) Ion chromatography measurement conditions
Measuring instrument: DIONEX DX-500
Eluent: 1.8 mM Na₂CO₃+1.7mM NaHCO₃
Column (temperature): ShodexSI-90 (room temperature) Flow rate: 1.0 ml/min
Poured amount: 25 µl
Detector: electroconductivity detector
Suppressor: DIONEX ASRS-300

### 2. Powder X-ray Diffraction;

Samples were subjected to powder X-ray diffractometry using Rotaflex manufactured by Rigaku Corporation.

With regard to the counting of diffraction peaks in the powder X-ray diffractometry for each sample, a signal that was detected with a signal (S) to noise (N) ratio (S/N) of 2 or more was regarded as a single peak.

The noise (N) was the width of the baseline.

### 3. Measurement of BET Specific Surface Area

A BET specific surface area was measured using Micromeritics Gemini 2360 manufactured by Shimadzu Corporation. The pretreatment time and the pretreatment temperature were 30 minutes and 200°C, respectively.

### 4. Measurement of Contact Angle

About 200 mg of a catalyst produced in Example or Comparative Example was allowed to stand for 30 minutes while pressurized to 37 Mpa by using a tablet-forming device. The tablet was collected from the forming device, and its contact angle was measured with a DropMaster contact angle measuring instrument (manufactured by Kyowa Interface Science Co., LTD.) based on perfect circle fitting method.

### 5. Evaluation of Oxygen Reducing Ability

### (1) Production of Electrode for Fuel Cells

95 mg of a catalyst produced in Example or Comparative Example and 5 mg of carbon (VULCAN (registered trademark) XC72 manufactured by Cabot Corporation) were added to 10 g of a solution obtained by mixing isopropyl alcohol and pure water at a mass ratio of isopropyl alcohol: pure water of 2:1. The mixture was ultrasonically stirred to give a suspended mixture. On a glassy carbon electrode (diameter: 6 mm, manufactured by Tokai Carbon Co., Ltd.), 30 µl of this mixture was applied and was dried at 120°C for 5 minutes, thereby forming 1.0 mg or more of an electrode catalyst layer for fuel cells on the carbon electrode surface. Furthermore, on the electrode catalyst layer for fuel cells, 10 µl of NAFION (registered trademark) (a 5% NAFION (registered trademark) solution (DE521, DuPont)) diluted ten times with isopropyl alcohol was applied, and was dried at 120°C for 1 hour to obtain an electrode for fuel cells.

### (2) Evaluation of Oxygen Reducing Ability

The electrode for fuel cells prepared was subjected to polarization in a 0.5 mol/L sulfuric acid aqueous solution at 30°C under an oxygen atmosphere and a nitrogen atmosphere at a potential scanning rate of 5 mV/sec, thereby recording each current-potential curve. As a reference electrode, a reversible hydrogen electrode was used in a sulfuric acid aqueous solution of the same concentration.

In the result of the above measurement, the potential at which the reduction current started to differ by 0.2 µA/cm² or more between the reduction current under the oxygen atmosphere and that under the nitrogen atmosphere was defined as an oxygen reduction onset potential.

### 6. Evaluation of Flooding Phenomenon

### (1) Preparation of Anode Ink

Into 50 mL of pure water, 0.6 g of platinum-supporting carbon (TEC10E60E, manufactured by TANAKA KIKINZOKU KOGYO K.K.) and 5 g of an aqueous solution containing 0.25 g of a proton conductive material (NAFION (registered trademark)) (5% NAFION (registered trademark) aqueous solution, manufactured by Wako Pure Chemical Industries, Ltd.) were introduced, and the resultant solution was mixed with an ultrasonic wave dispersion machine (UT-106H, manufactured by Sharp Manufacturing Systems Corporation) for 1 hour, to prepare an anode ink.

### (2) Preparation of Electrode Having Anode Catalyst Layer

A gas diffusion layer (carbon paper (TGP-H-060, manufactured by Toray Industries, Inc.)) was immersed in acetone for 30 seconds and degreased, thereafter dried, and then immersed in an aqueous 10% polytetrafluoroethylene (hereinafter also referred to as "PTFE") solution for 30 seconds.

The immersed product was dried at room temperature and was then heated at 350°C for 1 hour to provide a water-repellent gas diffusion layer having PTFE dispersed in the carbon paper (hereinafter also referred to as "GDL").

The GDL was formed into the size of 5 cm × 5 cm, and the surface thereof was coated with the anode ink using an automatic spray-coating apparatus (manufactured by San-Ei Tech Ltd.) at 80°C. By repeating the spray-coating, an electrode having an anode catalyst layer in which the amount of platinum (Pt) per unit area was 1 mg/cm² was prepared.

### (3) Preparation of Cathode Ink

To 50 ml of 2-propanol (manufactured by Wako Pure Chemical Industries, Ltd.), 0.237 g of a catalyst prepared in Example or Comparative Example and 0.1183 g of carbon black (Ketjen black EC300J, manufactured by LION Corporation) as an electron conductive material were added, and 2.84 g of an aqueous solution containing 0.142 g of a proton conductive material (NAFION (registered trademark)) (5% NAFION (registered trademark) aqueous solution, manufactured by Wako Pure Chemical Industries, Ltd.) was further put, and the resultant was mixed with an ultrasonic wave dispersion machine (UT-106H, manufactured by Sharp Manufacturing Systems Corporation) for 1 hour to prepare a cathode ink.

### (4) Preparation of Cathode

In the same manner as in "(2) Preparation of Electrode Having Anode Catalyst Layer ", GDL was prepared.

The above GDL was formed into the size of 5 cm × 5 cm, and the surface thereof was coated with the above cathode ink using an automatic spray-coating apparatus (manufactured by San-Ei Tech Ltd.) at 80°C. By repeating the spray-coating, an electrode having on the GDL surface a cathode catalyst layer, in which the total amount of the catalyst and the carbon black per unit area was 5 mg/cm² (hereinafter also referred to simply as "cathode") was prepared. The mass of the catalyst in the cathode catalyst layer per unit area was 3.3 mg/cm².

### (5) Preparation of Membrane Electrode Assembly for Fuel Cell

A NAFION (registered trademark) membrane (N-117, manufactured by DuPont) as an electrolyte membrane, the cathode, and the anode were prepared. A membrane electrode assembly for fuel cells (hereinafter also referred to as "MEA") in which the electrolyte membrane was interposed between the cathode and the anode was prepared in such a manner as described below.

First, the electrolyte membrane was heated in 3% hydrogen peroxide water at 80°C for 1 hour and then heated in pure water at 80°C for 1 hour. Subsequently, the electrolyte membrane was heated in a 1 M aqueous sulfuric acid solution at 80°C for 1 hour and then heated in pure water at 80°C for 1 hour.

The electrolyte membrane from which water was removed in such a manner was held by the cathode and the anode; and these were thermocompression bonded with a hot pressing machine at a temperature of 140°C and at a pressure of 3 MPa for 6 minutes so that the cathode catalyst layer and the anode catalyst layer would adhere to the electrolyte membrane, to thereby prepare MEA.

### (6) Preparation of Single Cell

The MEA was held by two sealing materials (gaskets), two separators each having a gas flow passage, two collectors and two rubber heaters, and fixed and secured with a bolt so that the pressure of contacted surface would be a prescribed value (4 N), to thereby prepare a single cell (cell area: 25 cm²) of a polymer electrolyte fuel cell.

### (7) Evaluation of Flooding Phenomenon

The temperature of the single cell, the temperature of an anode humidifier, and the temperature of a cathode humidifier were set to 90°C, 95°C and 65°C, respectively. To the anode side, hydrogen was supplied as a fuel at a flow rate of 1 L/min, and to the cathode side, oxygen was supplied as an oxidizing agent at a flow rate of 2 L/min; and while applying a back pressure of 300 kPa to both sides, the current density-voltage property of the single cell was measured.

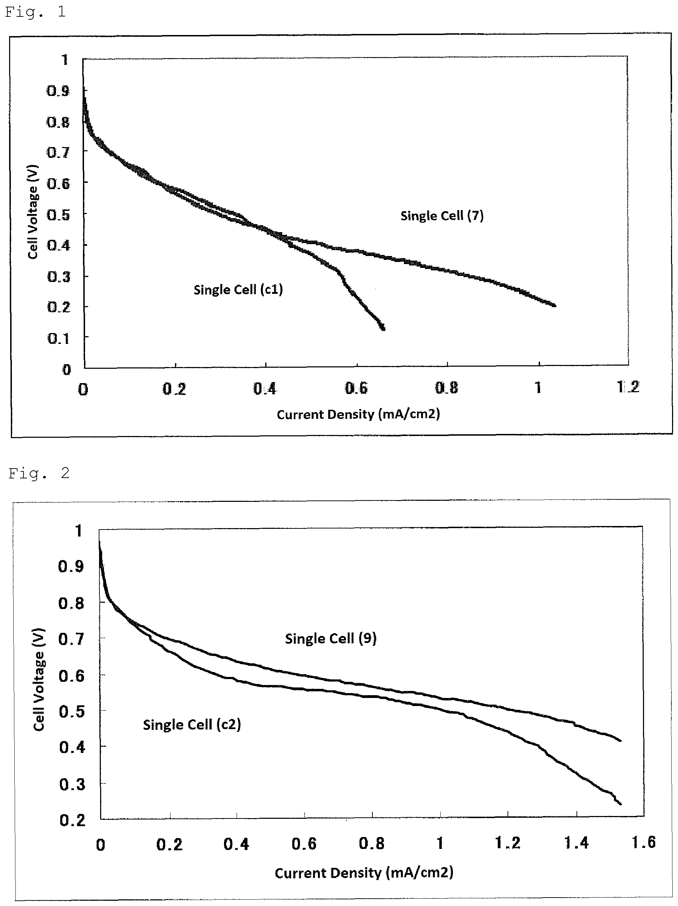

As a result of the comparison of current density-voltage properties of catalysts which had not been fluorinated (catalysts of Comparative Examples described below) and those of catalysts obtained by fluorinating these catalysts of Comparative Examples (catalysts of Examples described below), a catalyst in which flooding phenomenon was hardly recognized was evaluated as A (for example, Fig. 1), a catalyst in which flooding phenomenon was markedly suppressed was evaluated as B (for example, Fig. 2), and a catalyst in which flooding phenomenon was suppressed to some degree was evaluated as C.

### [Comparative Example 1]

### 1. Production of Electrode Catalyst for Fuel Cells and Its Evaluation:

In accordance with procedure indicated in WO 2010/131634 (Patent Literature 1), Example 1, 1.27 g of a catalyst (c1) containing titanium, lanthanum, carbon, nitrogen and oxygen (corresponding to "catalyst (1)" of Example 1 of Patent Literature 1) was obtained.

Evaluation results of the catalyst (c1) are set forth in Table 1.

A current-voltage property of a single cell (c1) using the catalyst (c1) is shown in Fig. 1. Rapid decrease of the cell voltage was recognized to start at around 0.4 V. It is thus believed that the single cell (c1) underwent flooding phenomenon.

### [Example 1]

The same procedure as in Comparative Example 1 was repeated to produce the catalyst (c1). 600 mg of the catalyst (c1) were introduced to a normal-pressure gas-phase flow reactor, and were allowed to stand under reduced pressure at 110°C for 1 hour. Then, temperature in the reactor was cooled to 20°C, and into the reactor, nitrogen gas containing 20 vol% of fluorine gas (hereinafter also referred to as the "fluorine-containing gas") was fed for 30 minutes. Thereafter, atmosphere in the reactor was purged with nitrogen gas, to obtain 639 mg of powder (hereinafter referred to as the "catalyst (1)").

Evaluation results of the catalyst (1) are set forth in Table 1.

### [Example 2]

Example 1 was repeated except that the temperature at which the fluorine gas-containing gas was fed was changed from 20°C to 110°C, to obtain 702 mg of powder (hereinafter referred to as the "catalyst (2)").

Evaluation results of the catalyst (2) are set forth in Table 1. In powder X-ray diffraction spectrum of the catalyst (2) (not shown in drawings), diffraction peaks assigned to TiOF₂ (23.39°, 33.37°, 47.88°) were observed.

### [Example 3]

Example 1 was repeated except that the temperature at which the fluorine gas-containing gas was fed was changed from 20°C to 200°C, to obtain 666 mg of powder (hereinafter referred to as the "catalyst (3)").

Evaluation results of the catalyst (3) are set forth in Table 1. In powder X-ray diffraction spectrum of the catalyst (3) (not shown in drawings), diffraction peaks assigned to TiOF₂ were observed.

### [Example 4]

Example 1 was repeated except that the temperature at which the fluorine gas-containing gas was fed was changed from 20°C to 300°C, to obtain 525 mg of powder (hereinafter referred to as the "catalyst (4)").

Evaluation results of the catalyst (4) are set forth in Table 1. In powder X-ray diffraction spectrum of the catalyst (4) (not shown in drawings), diffraction peaks assigned to TiOF₂ were observed.

### [Example 5]

Example 1 was repeated except that the fluorine gas concentration in the fluorine gas-containing gas was changed from 20 vol% to 1 vol%, to obtain 612 mg of powder (hereinafter referred to as the "catalyst (5)").

Evaluation results of the catalyst (5) are set forth in Table 1.

### [Example 6]

Example 2 was repeated except that the fluorine gas concentration in the fluorine gas-containing gas was changed from 20 vol% to 1 vol%, to obtain 606 mg of powder (hereinafter referred to as the "catalyst (6)").

Evaluation results of the catalyst (6) are set forth in Table 1.

### [Example 7]

Example 3 was repeated except that the fluorine gas concentration in the fluorine gas-containing gas was changed from 20 vol% to 1 vol%, to obtain 597 mg of powder (hereinafter referred to as the "catalyst (7)").

Evaluation results of the catalyst (7) are set forth in Table 1.

A current-voltage property of a single cell (7) using the catalyst (7) is shown in Fig. 1. Rapid decrease of the cell voltage was not recognized. It is thus believed that the single cell (7) hardly underwent flooding phenomenon.

### [Example 8]

Example 4 was repeated except that the fluorine gas concentration in the fluorine gas-containing gas was changed from 20 vol% to 1 vol%, to obtain 597 mg of powder (hereinafter referred to as the "catalyst (8)").

Evaluation results of the catalyst (8) are set forth in Table 1.

### [Comparative Example 2]

In accordance with procedure indicated in WO2011/99493 (Patent Literature 2), Example 1-8, a catalyst (c2) containing titanium, iron, carbon, nitrogen and oxygen (corresponding to "catalyst (8)" of Example 1-8 of Patent Literature 2) was obtained.

Evaluation results of the catalyst (c2) are set forth in Table 1.

A current-voltage property of a single cell (c2) using the catalyst (c2) is shown in Fig. 2. Rapid decrease of the cell voltage was recognized to start at around 0.5 V. It is thus believed that the single cell (c2) underwent flooding phenomenon.

### [Example 9]

Example 6 was repeated except that the catalyst (c1) was changed to 200 mg of the catalyst (c2), so that 612 mg of powder (hereinafter referred to as the "catalyst (9)") was obtained.

Evaluation results of the catalyst (9) are set forth in Table 1.

A current-voltage property of a single cell (9) using the catalyst (9) is shown in Fig. 2. Rapid decrease of the cell voltage was hardly recognized. It is thus believed that in the single cell (9), flooding phenomenon was markedly suppressed.

**Table 1**

| | Fluorination Conditions | | Elemental Analysis (molar ratio) | | | | | | | Specific Surface Area(m²/g) | Oxygen Reduction Onset Potential (V vs NHE) | Contact Angle (°) | Evaluation of Flooding |
|---|---|---|---|---|---|---|---|---|---|---|---|---|---|
| | Reaction temperature (°C) | F₂ concentration (vol%) | Ti | La | Fe | C | N | O | F | | | | |
| Comp. Example 1 | | | 0.98 | 0.02 | | 0.14 | 0.09 | 1.72 | | 41 | 0.89 | 29.8 | - |
| Example 1 | 20 | 20 | 0.98 | 0.02 | | 0.12 | 0.07 | 1.70 | 0.02 | 52 | 0.86 | 26.1 | C |
| Example 2 | 110 | 20 | 0.98 | 0.02 | | 0.12 | 0.07 | 1.71 | 0.04 | 53 | 0.80 | 26.6 | C |
| Example 3 | 200 | 20 | 0.98 | 0.02 | | 0.12 | 0.07 | 1.70 | 0.08 | 57 | 0.90 | 43.8 | A |
| Example 4 | 300 | 20 | 0.98 | 0.02 | | 0.10 | 0.07 | 1.69 | 0.15 | 65 | 0.80 | 45.8 | A |
| Example 5 | 20 | 1 | 0.98 | 0.02 | | 0.14 | 0.08 | 1.72 | 0.01 | 56 | 0.84 | 30.9 | B |
| Example 6 | 110 | 1 | 0.98 | 0.02 | | 0.14 | 0.08 | 1.71 | 0.01 | 56 | 0.84 | 33.1 | B |
| Example 7 | 200 | 1 | 0.98 | 0.02 | | 0.14 | 0.08 | 1.71 | 0.02 | 57 | 1.00 | 40.4 | A |
| Example 8 | 300 | 1 | 0.98 | 0.02 | | 0.13 | 0.07 | 1.70 | 0.02 | 55 | 0.85 | 35.7 | B |
| Comp. Example 2 | | | 0.93 | | 0.07 | 2.31 | 0.14 | 1.24 | | 241 | 0.95 | 29.8 | - |
| Example 9 | 110 | 1 | 0.93 | | 0.07 | 2.28 | 0.13 | 1.20 | 0.02 | 244 | 0.99 | 30.9 | B |

## Claims

1. A production process of an electrode catalyst for fuel cells comprising a fluorination step of bringing a catalyst body into contact with fluorine, the catalyst body comprising titanium and an atom of at least one metal element M selected from the group consisting of iron and lanthanum, a carbon atom, a nitrogen atom and an oxygen atom, wherein titanium:M =(1-α) :α, provided that 0≤α≤0.20, and wherein when a composition of the catalyst body is expressed as MCₓN_{y}O_{z} provided that M is the metal element M and the total amount of M is 1 , the ranges of x, y and z are 0<x≤7, 0<y≤2 and 0<z≤3.

2. The process for producing an electrode catalyst for fuel cells according to claim 1, wherein in the fluorination step, the catalyst body is brought into contact with a mixture gas of fluorine gas and a diluting gas.

3. The process for producing an electrode catalyst for fuel cells according to claim 2, wherein the fluorine gas concentration in the mixture gas is from 0.1 to 50 vol%.

4. The process for producing an electrode catalyst for fuel cells according to any one of claims 1 to 3, wherein the fluorination step is performed at 0 to 500°C.

5. The process for producing an electrode catalyst for fuel cells according to any one of claims 1 to 4, wherein the fluorination step is performed for 1 to 120 minutes.

6. An electrode catalyst for fuel cells comprising titanium and an atom of at least one metal element M selected from the group consisting of iron and lanthanum, a carbon atom, a nitrogen atom and an oxygen atom, wherein titanium:M =(1-α):α, provided that 0≤α≤0.20, and wherein when a composition of the catalyst body is expressed as MCₓN_{y}O_{z} provided that M is the metal element M and the total amount of M is 1 , the ranges of x, y and z are 0<x≤7, 0<y≤2 and 0<z≤3, **characterized by** the electrode catalyst for fuel cells having a fluorinated surface.

7. An electrode catalyst for fuel cells which is obtained by the process according to any one of claims 1 to 5.

8. The electrode catalyst for fuel cells according to claim 6 or 7, which comprises 0.005 to 0.2 mol of a fluorine atom based on 1 mol of an atom of the metal element.

9. An electrode catalyst layer for fuel cells comprising the electrode catalyst for fuel cells according to any one of claims 6 to 8.

10. The electrode catalyst layer for fuel cells according to claim 9, further comprising electron conductive particles.

11. An electrode comprising an electrode catalyst layer for fuel cells and a porous support layer, wherein the electrode catalyst layer for fuel cells is the electrode catalyst layer for fuel cells according to claim 9 or 10.

12. A membrane electrode assembly comprising a cathode, an anode and an electrolyte membrane interposed between the cathode and the anode, wherein the cathode and/or the anode is the electrode according to claim 11.

13. A fuel cell comprising the membrane electrode assembly according to claim 12.

14. The fuel cell according to claim 13, which is a polymer electrolyte fuel cell.

## Patentansprüche

1. Verfahren zum Herstellen eines Elektrodenkatalysators für Brennstoffzellen, welches eine Fluorierungsstufe umfasst, in der ein Katalysatorkörper mit Fluor in Kontakt gebracht wird, wobei der Katalysatorkörper Titan und ein Atom mindestens eines Metallelements M, das aus der aus Eisen und Lanthan bestehenden Gruppe ausgewählt ist, ein Kohlenstoffatom, ein Stickstoffatom und ein Sauerstoffatom umfasst, wobei Titan: M = (1-α):α, mit der Maßgabe, dass 0≤ α≤0,20, und wobei die Bereiche von x, y und z 0<x≤7, 0<y≤2 und 0<z≤3, wenn eine Zusammensetzung des Katalysatorkörpers als MCₓN_{y}O_{z} unter der Maßgabe ausgedrückt wird, dass M das Metallelement M und die Gesamtmenge von M 1 ist.

2. Verfahren zum Herstellen eines Elektrodenkatalysators für Brennstoffzellen nach Anspruch 1, wobei in der Fluorierungsstufe der Katalysatorkörper mit einem Mischgas aus Fluorgas und einem Verdünnungsgas in Kontakt gebracht wird.

3. Verfahren zum Herstellen eines Elektrodenkatalysators für Brennstoffzellen nach Anspruch 2, wobei die Fluorgaskonzentration in dem Mischgas 0,1 bis 50 Volumenprozent ist.

4. Verfahren zum Herstellen eines Elektrodenkatalysators für Brennstoffzellen nach einem der Ansprüche 1 bis 3, wobei die Fluorierungsstufe bei 0 bis 500°C durchgeführt wird.

5. Verfahren zum Herstellen eines Elektrodenkatalysators für Brennstoffzellen nach einem der Ansprüche 1 bis 4, wobei die Fluorierungsstufe während 1 bis 120 Minuten durchgeführt wird.

6. Elektrodenkatalysator für Brennstoffzellen, der Titan und ein Atom mindestens eines Metallelements M, das aus der Gruppe ausgewählt ist, die aus Eisen und Lanthan besteht, ein Kohlenstoffatom, ein Stickstoffatom und ein Sauerstoffatom enthält, wobei Titan: M=(1-α):α, mit der Maßgabe, dass 0≤α≤0,20, und worin, wenn eine Zusammensetzung des Katalysatorkörpers als MCₓN_{y}Ozausgedrückt wird, worin M das Metallelement M ist und die Gesamtmenge von M 1 ist, die Bereiche von x, y und z 0<x≤7, 0<y≤2 und 0<z≤3 sind, **gekennzeichnet durch** den Elektrodenkatalysator für Brennstoffzellen mit einer fluorierten Oberfläche.

7. Elektrodenkatalysator für Brennstoffzellen, der durch das Verfahren nach einem der Ansprüche 1 bis 5 erhalten wird.

8. Elektrodenkatalysator für Brennstoffzellen nach Anspruch 6 oder 7, der 0,005 bis 0,2 mol Fluoratome in Bezug auf 1 mol eines Atoms des Metallelements enthält.

9. Elektrodenkatalysatorschicht für Brennstoffzellen, die den Elektrodenkatalysator für Brennstoffzellen nach einem der Ansprüche 6 bis 8 enthält.

10. Elektrodenkatalysatorschicht für Brennstoffzellen nach Anspruch 9, die außerdem elektronenleitende Teilchen enthält.

11. Elektrode, die eine Elektrodenkatalysatorschicht für Brennstoffzellen und eine poröse Trägerschicht umfasst, wobei die Elektrodenkatalysatorschicht für Brennstoffzellen die Elektrodenkatalysatorschicht für Brennstoffzellen nach Anspruch 9 oder 10 ist.

12. Membranelektrodenaufbau, der eine Kathode, eine Anode und eine zwischen der Kathode und der Anode angeordnete Elektrolytmembran enthält, wobei die Kathode und/oder die Anode die Elektrode nach Anspruch 11 ist.

13. Brennstoffzelle, die den Membranelektrodenaufbau nach Anspruch 12 umfasst.

14. Brennstoffzelle nach Anspruch 13, die eine Polymerelektrolytbrennstoffzelle ist.

## Revendications

1. Procédé de production d'un catalyseur d'électrode pour des piles à combustible, comprenant une étape de fluoration qui consiste à mettre un corps de catalyseur en contact avec du fluor, le corps de catalyseur comprenant du titane et un atome d'au moins un élément de métal M sélectionné dans le groupe comprenant le fer et le lanthane, un atome de carbone, un atome d'azote et un atome d'oxygène, dans lequel titane:M = (1-α):α, pourvu que 0 ≤ α ≤ 0,20, et dans lequel, lorsqu'une composition du corps de catalyseur est exprimée par MCₓN_{y}O_{z}, pourvu que M soit l'élément de métal M et que la quantité totale de M soit 1, les plages de x, y et z sont 0 < x ≤ 7, 0 < y ≤ 2 et 0 < z ≤ 3.

2. Procédé de production d'un catalyseur d'électrode pour des piles à combustible selon la revendication 1, dans lequel lors de l'étape de fluoration, le corps de catalyseur est mis en contact avec un mélange gazeux composé de fluor gazeux et d'un gaz de dilution.

3. Procédé de production d'un catalyseur d'électrode pour des piles à combustible selon la revendication 2, dans lequel la concentration en fluor gazeux dans le mélange gazeux est comprise entre 0,1 % en volume et 50 % en volume.

4. Procédé de production d'un catalyseur d'électrode pour des piles à combustible selon l'une quelconque des revendications 1 à 3, dans lequel l'étape de fluoration est exécutée entre 0°C et 500°C.

5. Procédé de production d'un catalyseur d'électrode pour des piles à combustible selon l'une quelconque des revendications 1 à 4, dans lequel l'étape de fluoration est exécutée pendant une durée de 1 minute à 120 minutes.

6. Catalyseur d'électrode pour des piles à combustible comprenant du titane et un atome d'au moins un élément de métal M sélectionné dans le groupe comprenant le fer et le lanthane, un atome de carbone, un atome d'azote et un atome d'oxygène, dans lequel titane:M = (1-α):α, pourvu que 0 ≤ α ≤ 0,20, et dans lequel, lorsqu'une composition du corps de catalyseur est exprimée par MCₓN_{y}O_{z}, pourvu que M soit l'élément de métal M et que la quantité totale de M soit 1, les plages de x, y et z sont 0 < x ≤ 7, 0 < y ≤ 2 et 0 < z ≤ 3, **caractérisé en ce que** le catalyseur d'électrode pour des piles à combustible présente une surface fluorée.

7. Catalyseur d'électrode pour des piles à combustible qui est obtenu à l'aide du procédé selon l'une quelconque des revendications 1 à 5.

8. Catalyseur d'électrode pour des piles à combustible selon la revendication 6 ou 7, comprenant de 0,005 mole à 0,2 mole d'un atome de fluor sur la base de 1 mole d'un atome de l'élément de métal.

9. Couche de catalyseur d'électrode pour des piles à combustible comprenant le catalyseur d'électrode pour des piles à combustible selon l'une quelconque des revendications 6 à 8.

10. Couche de catalyseur d'électrode pour des piles à combustible selon la revendication 9, comprenant en outre des particules conductrices d'électrons.

11. Electrode comprenant une couche de catalyseur d'électrode pour des piles à combustible et une couche de support poreuse, dans laquelle la couche de catalyseur d'électrode pour des piles à combustible est la couche de catalyseur d'électrode pour des piles à combustible selon la revendication 9 ou 10.

12. Ensemble d'électrode à membrane comprenant une cathode, une anode et une membrane d'électrolyte interposée entre la cathode et l'anode, dans lequel la cathode et/ou l'anode est (sont) l'électrode selon la revendication 11.

13. Pile à combustible comprenant l'ensemble d'électrode à membrane selon la revendication 12.

14. Pile à combustible selon la revendication 13, qui est une pile à combustible à électrolyte polymère.
